# EUROPEAN PATENT SPECIFICATION

(11) **EP 3 782 099 B1**
(45) Date of publication and mention of the grant of the patent: **03.12.2025**
(21) Application number: 19716186.2
(22) Date of filing: 12.04.2019
(51) Int. Cl.: G06Q 10/087, B29B 17/00, B65G 65/00, B29L 30/00

(54) **PROCESS FOR PROCESSING, MANAGEMENT AND EXTRACTION OF PRODUCTS RECOVERED FOR REUSE**
VERFAHREN ZUR VERARBEITUNG, VERWALTUNG UND EXTRAKTION VON ZUR WIEDERVERWENDUNG WIEDERGEWONNENEN PRODUKTEN
PROCÉDÉ DE TRAITEMENT, DE GESTION ET D'EXTRACTION DE PRODUITS RÉCUPÉRÉS EN VUE D'UNE RÉUTILISATION

(30) Priority: 19.04.2018 FR 1853440
(43) Date of publication of application: 24.02.2021
(73) Proprietor: COMPAGNIE GENERALE DES ETABLISSEMENTS MICHELIN, 63000 Clermont-Ferrand (FR)
(72) Inventor: DRAKE, Anthony, 63040 CLERMONT-FERRAND Cedex 9 (FR); ANNET, Pierre, 63040 CLERMONT-FERRAND Cedex 9 (FR); RICCIARDI, James, 63040 CLERMONT-FERRAND Cedex 9 (FR); WILSON, Zack, 63040 CLERMONT-FERRAND Cedex 9 (FR)
(74) Representative: M.F.P. Michelin
(86) International application number: PCT/EP2019/059395
(87) International publication number: WO 2019/201762

(56) References cited:
- EP-A1- 3 750 117
- EP-A1- 3 750 123
- WO-A1-01/24618
- WO-A1-2014/129535
- ANONYMOUS: "Rework", 27 September 2015 (2015-09-27), pages 1 - 6, XP055925718, Retrieved from the Internet <URL:https://web.archive.org/web/20150927100654/https://www.electronicsystems.it/products/rework/> [retrieved on 20220530]
- MAZUREK ET AL: "Usine Michelin Montceau ... inauguration de son nouvel outil : la PA BU !", MONTCEAU-NEWS.COM, 24 March 2016 (2016-03-24), pages 2-10;20-21;31-32;35;37;38;40;45-46, XP055503159, Retrieved from the Internet <URL:http://montceau-news.com/saone_et_loire/304844-usine-michelin-montceau.html> [retrieved on 20180829]
- YANCHEN GAO ET AL: "RFID application in tire manufacturing logistics", ADVANCED MANAGEMENT SCIENCE (ICAMS), 2010 IEEE INTERNATIONAL CONFERENCE ON, IEEE, PISCATAWAY, NJ, USA, 9 July 2010 (2010-07-09), pages 109 - 112, XP031735868, ISBN: 978-1-4244-6931-4
- QIAN WANG ET AL: "A RFID-based automated warehouse design", COMPUTER ENGINEERING AND TECHNOLOGY (ICCET), 2010 2ND INTERNATIONAL CONFERENCE ON, IEEE, PISCATAWAY, NJ, USA, 16 April 2010 (2010-04-16), pages V6 - 359, XP031690413, ISBN: 978-1-4244-6347-3

## Description

### TECHNICAL FIELD

The invention relates in general to the production of rubber mixtures and of vehicle tyres produced therefrom. More particularly, the invention relates to the processing and the management of the loading and reloading of pallets with containers of products recovered for reuse as feedstock products in a mixing cycle.

### CONTEXT

In the field of tyre manufacture, there are a number of machines that produce semi-finished products. The products produced by these machines are made up of at least two rubber mixtures having different properties (referred to hereinafter as "complexed products"). The machines perform various processes, including extrusion processes, assembly processes and stripping processes, in which some of what is manufactured cannot be used directly in the creation of a tyre (for example, during a change in size, a start-up, etc.). During start-ups, stoppages, changes in size and other known steps, it is commonplace for these machines to generate products that are not used downstream (for example, on the assembly machines). Likewise, on these machines for assembling tyres using the complexed products produced beforehand (for example, machines known by the trade name VMI MAXX^{™}), products used by these machines cannot be put to use immediately on the production line. For example, the dimensional tolerances have not been met.

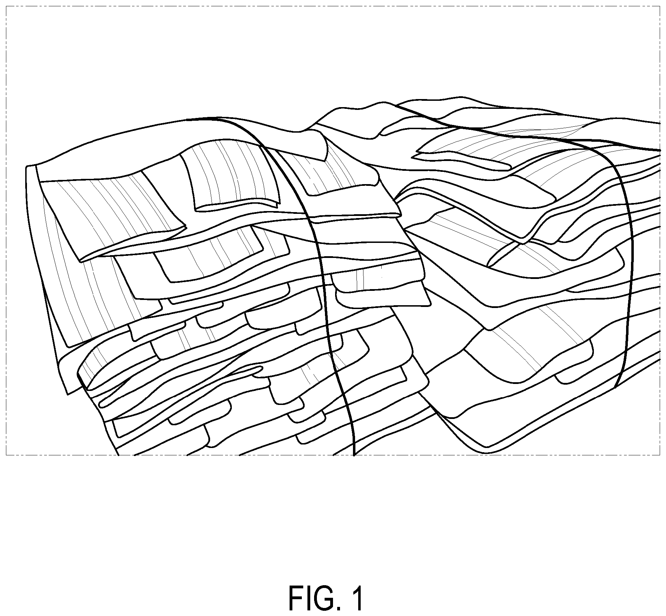

The complexed products that are not used as-is, but that can be recovered for reuse after treatment (referred to hereinafter as "products recovered for reuse" or "recovered products"), are usually stored without any special consideration. Reference is made to Figure 1 that shows an example of a usual format in which strips of complexed products are arranged in piles with no regard to the properties of the different complexed products. The complexed products, having different properties that are not precisely known, are neither packaged nor identified nor weighed nor managed. Thus, complexed products of various natures and various origins may find themselves in the same pile, on adjacent pallets, and even on the same pallet. This type of storage does not allow management of properties of the complexed products obtained within a pallet.

The present invention relates to the at-source processing of products recovered for reuse to allow handling to be fully automated. The products recovered for reuse originating from different processes are packaged in containers and managed with pallets of containers of products recovered for reuse to facilitate their processing, their identification and their storage. The products recovered for reuse are therefore always available for use in rubber mixtures.

### SUMMARY

The invention relates to a process of processing and extracting products recovered for reuse originating from at least one complexed-product manufacturing system in a tire production installation. The invention is set out in the appended set of claims.

The process includes the following steps:
- identifying the products recovered for reuse according to a planned rubber mixing cycle, in using the identified recovered products as feedstock products in the rubber mixing cycle
- filling corresponding containers with the identified recovered products, each container containing only one recovered product type at any one time;
- transferring the filled containers from a management system downstream of the complexed-product manufacturing system toward a demoulding and extraction system downstream of the management system;
- demoulding the products recovered for reuse from the containers at the demoulding and extraction system in order to empty the containers; and
- extracting the products recovered for reuse from the containers at the demoulding and extraction system.

In certain embodiments, the process also includes the following steps:
- identifying containers filled with the identified recovered products according to the rubber mixing cycle;
- stacking the containers filled with the identified recovered products upon one or more pallets, each pallet having a generally rectangular geometry;
- weighing each container filled with the identified recovered products at a weighing station before the step of demoulding the recovered products; and
- recovering automatically all empty containers after the step of demoulding the recovered products in order to transfer the empty containers from the demoulding and extraction system to the management system.

In certain embodiments, the step of transferring the containers includes the step of transferring the containers from an emptying zone of the management system toward the weighing station of the demoulding and extraction system. In such embodiments, the step of recovering automatically the empty containers includes the step of transferring the empty containers from an empty-container station toward a stacking zone of the management system.

In certain embodiments, the process includes the step of providing a proper positioning of each container on an associated pallet.

In certain embodiments, the process also includes the step of providing an identification and gripping system with an automated handling device that works with an identification and gripping means having a tag integrated in the container that allows the identification of the container by a reader of the automated handling device, and a system of recesses and corresponding projections, such that the gripping system effects proper positioning of the container by aligning a projection in a corresponding reinforcement.

In certain embodiments, the process includes the step of aligning the reader with the tag so that the reader can recognize the associated container.

In certain embodiments, the reader is an RFID reader and the tag is an RFID tag.

In certain embodiments, the step of demoulding the recovered for reuse from the containers includes a demoulding process that includes using a demoulding and extraction device having retractable fingers in register with orifices aligned along the length of a bottom of the container, such that the retractable fingers are introduced into the container through the orifices and elevate the valued product to empty the container.

In certain embodiments, the step of extracting the products recovered for reuse from the containers includes an extraction process that includes using a transfer and unloading device having elongate fingers that form a predetermined angle with respect to a mounting support of a mobile carriage that moves along a horizontal path, such that the elongate fingers move at right angles relative to the retractable fingers of the demoulding and extraction device when the demoulding and extraction device lifts the recovered product from a container.

In certain embodiments, the process includes the step of storing the containers full of products recovered for reuse in a container storage system having a storage means at which the containers full of products recovered for reuse are identified and stored according to the natures of the products, the properties of which are known. In certain such embodiments, the storage means is an automated storage system.

In certain embodiments, the process also includes the step of transferring the products recovered for reuse toward a system downstream of the demoulding and extraction system. In certain such embodiments, the system downstream of the demoulding and extraction system includes at least one mixer.

In certain embodiments, the process includes the step of harmonizing the identification of a pallet with the identification of the containers stored on the pallet.

Further aspects of the invention will become obvious from the following detailed description.

### BRIEF DESCRIPTION OF THE DRAWINGS

The nature and various advantages of the invention will become more evident from reading the detailed description that follows, and from studying the attached drawings, in which the same reference numerals denote identical parts throughout, and in which:
Figure 1 represents a known format of the complexed products originating from at least one manufacturing system.
Figure 2 represents a top view, and Figure 3 represents a perspective view, of a container intended to receive a corresponding product recovered for reuse.
Figure 4 represents a cross-sectional view, and Figure 5 represents a partial view, of a pair of containers of Figures 2 and 3 stacked one on top of another.
Figure 6 represents a longitudinal sectional view, and Figure 7 represents a partial view, of the stacked containers of Figures 4 and 5.
Figure 8 represents a perspective view of a gripper used with the container of Figures 2 and 3.
Figure 9 represents a partial view of the gripper of Figure 8.
Figure 10 represents a partial view of the gripper of Figures 8 and 9 during engagement with the container of Figures 2 and 3.
Figure 11 represents a perspective view of the gripper of Figures 8 and 9 during transfer of the container of Figures 2 and 3.
Figure 12 represents a schematic view of the centring of an identification and gripping means for transferring the container of Figures 2 and 3.
Figure 13 represents a perspective view of several containers stacked on a pallet.
Figure 14 represents a perspective view of one embodiment of the pallet of Figure 13.
Figure 15 represents a cross-sectional view, and Figure 16 represents a partial view, of the pallet of Figure 14 with containers of Figures 2 and 3 stacked thereon.
Figure 17 represents a longitudinal sectional view, and Figure 18 represents a partial view, of the pallet and the stacked containers of Figures 15 and 16.
Figure 19 represents a schematic view of a system that manages, demoulds and extracts products recovered for reuse, including a management system and a demoulding and extraction system.
Figure 20 represents a partial perspective view of a container system with a stacking device.
Figure 21 represents a schematic front view of the demoulding and extraction system of Figure 19.
Figure 22 represents a schematic front view of a demoulding device of the transfer and unloading device of Figure 21.
Figure 23 represents a side view of the demoulding device of Figure 22.
Figure 24 represents a perspective front view of a transfer and unloading device of the demoulding and extraction system of Figure 19.
Figure 25 represents a side view of the transfer and unloading device of Figure 24 and an associated mobile carriage.
Figures 26 to 37 represent schematic views of the system of Figure 14 during a demoulding and extraction cycle.

### DETAILED DESCRIPTION

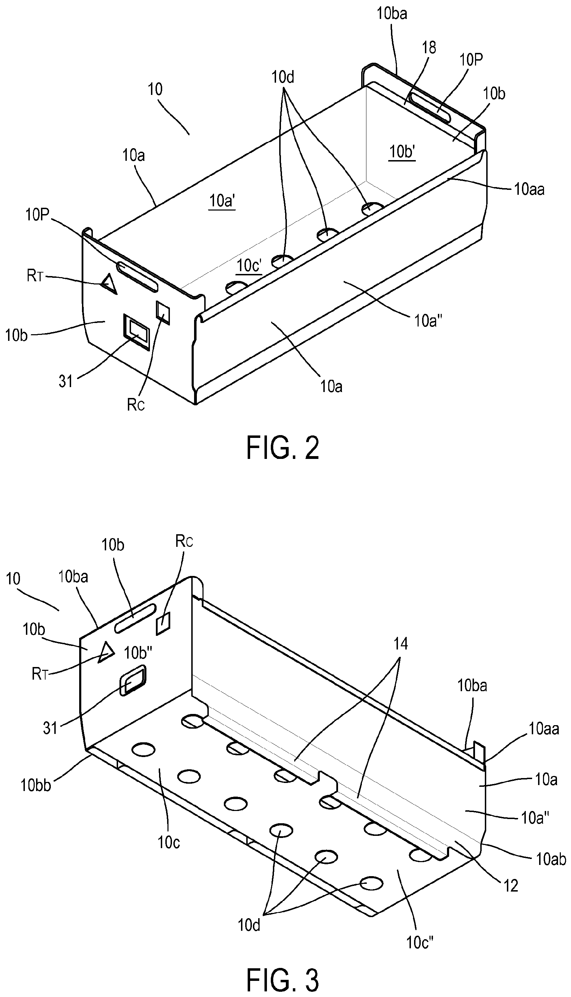

Referring now to the figures, in which the same numerals identify identical elements, Figures 2 and 3 show one example of a container (or "bucket") 10 in which a corresponding recovered product is stored for reuse. The unused complexed products are identified into various kinds and various grades, and each kind and each grade designates a specific complexed product, the properties of which are known. In order to ensure a product recovered for reuse that has controlled properties, there are various natures of complexed products that will be used in rubber mixtures that are used later in a mixing process. In the description, the various kinds, grades, batches of complexed products will be designated by the term "nature" of complexed product.

Each product recovered for reuse is stored in a corresponding container 10, and each container contains only one single type of recovered product at any one time. The filling of each container 10 is performed in such a way that its volume is more or less constant. In order to control the specific properties of a planned mixture, each product recovered for reuse is placed in a corresponding container 10 that is designated to receive it. The container 10 and its contents (namely, a product recovered for reuse having known properties) are identified, known and managed by virtue of an identification means incorporated into the container 10. Identification of the container 10 is performed either manually (for example, using at least one visual and/or tactile identifier) or automatically (for example using numerals, codes, RFID identifications, hypertext links or equivalent means). The invention is described in relation to an RFID identification incorporated into the container 10, but it is understood that other equivalent means of identification can be used.

Referring again to Figures 2 and 3, each container 10 comes with a pair of opposite long sides 10a, and each long side has an interior surface 10a' and an exterior surface 10a" that coincide with an upper edge 10aa and a lower edge 10ab of the long side. Each container 10 also comes with a pair of opposite short sides 10b, and each short side has an interior surface 10b' and an exterior surface 10b" that coincide with an upper edge 10ba and a lower edge 10bb of the short side. A perimeter is formed by the lower edges 10ab, 10bb, along which a bottom 10c is assembled. The bottom 10c has an interior surface 10c' that receives the complexed products (that become the products recovered for reuse as described hereinbelow) and an exterior surface 10c". Several orifices 10d are aligned along the length of the bottom 10c of the container 10. The interior surfaces 10a' of the long sides 10a, the interior surfaces 10b' of the short sides 10b and the interior surface 10c' of the bottom 10c together form a volume to receive a specific product recovered for reuse.

In one embodiment of the container 10, the interior surface 10a' of each long side 10a is inclined with respect to the bottom 10c (for example, by an angle of up to 5°) in order to ensure release of the product recovered for reuse from the full container. An optional non-stick coating may be applied to the interior surfaces 10a', 10b', 10c' in order to facilitate extraction of the complexed product from the corresponding container.

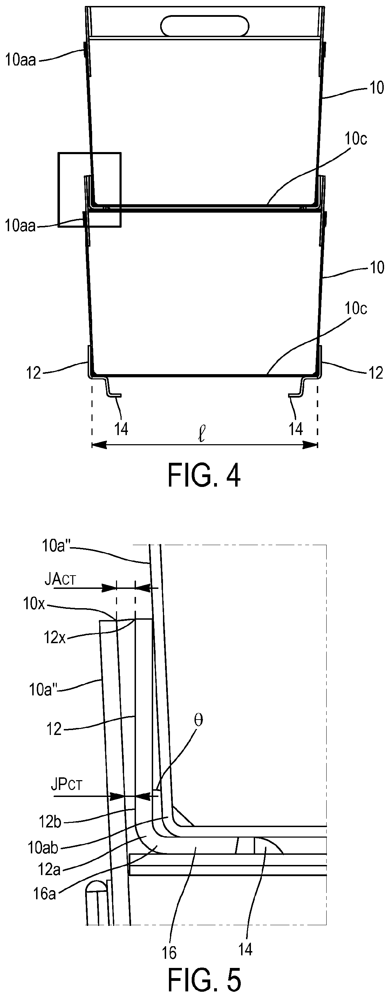

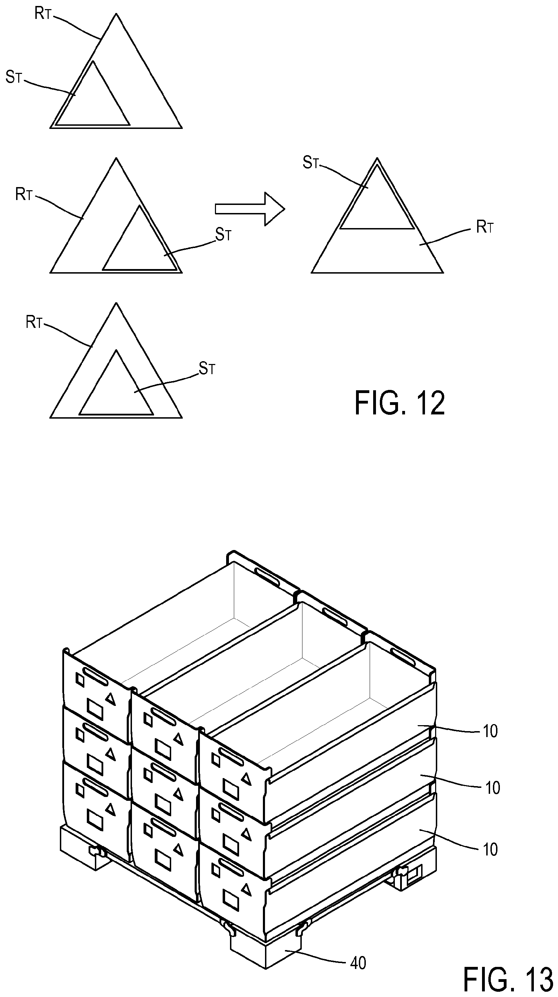

Referring once again to Figures 2 and 3 and also to Figures 4 to 7, each container 10 includes a support 12 that extends along the lower edge 10ab of each long side 10a and at the base of the bottom 10c. The support 12 may be integral with the container 10 or it may be provided as a separate element that can be added to the container. Each support 12 includes one or more legs 14 that render the container 10 stackable on a pallet (see Figures 13 and 15 to 18) and/or on itself (see Figures 4 to 7 and Figure 13). The legs 14 are offset by a predetermined angle Θ from an edge 12a on the bottom of one side 12b of the support 12 to create a shoulder 16 with a predetermined radius 16a. In one embodiment, each leg 14 makes an angle of around 3° with the corresponding edge, in order to correctly position the container with respect to a corresponding pallet (as described hereinbelow). The shoulder 16 engages the upper edge 10aa of a long side 10a of a container 10 below, and allows several containers 10 to be stacked (for example, as shown in Figures 4 to 7 and in Figure 13). In the embodiment shown, two legs 14 extend at the bottom of the shoulder 16, but it must be understood that the legs may be replaced by one or more legs or by one or more equivalent elements.

Referring once again to Figure 2 and also to Figures 4 to 7, a ledge 18 with a predetermined radius 18a extends along the upper edge 10ba of each short side 10b. This ledge 18 engages the lower edge 10bb of a short side 10b of another container 10, and allows several containers 10 to be stacked (for example, as shown in Figures 4 to 7 and in Figure 13). It must be appreciated that a corresponding structure, or an equivalent structure (such as one or more tabs), may be used in place of the ledge 18. The ledge 18, or a corresponding structure, may be used in combination with the legs 14 to align and correctly position several stacked containers.

Correct mutual positioning of the stacked containers is achieved via female faces and male faces at different angles. With reference to Figures 4 and 5, a pair of containers 10 are stacked in such a way that an exterior surface 12a of the support 12 of the container on top is adjacent to the interior surface 10a' of the long side 10a of the container underneath. The ledge 18 engages the shoulder 16 adjacent its radius 16a. In a transverse direction, it can be seen that an approach clearance JA_{CT} is defined between one end 12x of the support 12 of the container on top and one end 10x of the long side 10a of the container underneath. In one embodiment, this approach clearance is approximately 5 mm. This approach clearance allows a good positioning clearance JP_{CT} defined between one part of the support 12, next to the radius 16a, and an adjacent part of the interior surface 10a' of the long side 10a of the container underneath. In one embodiment, this positioning clearance is around 2 mm.

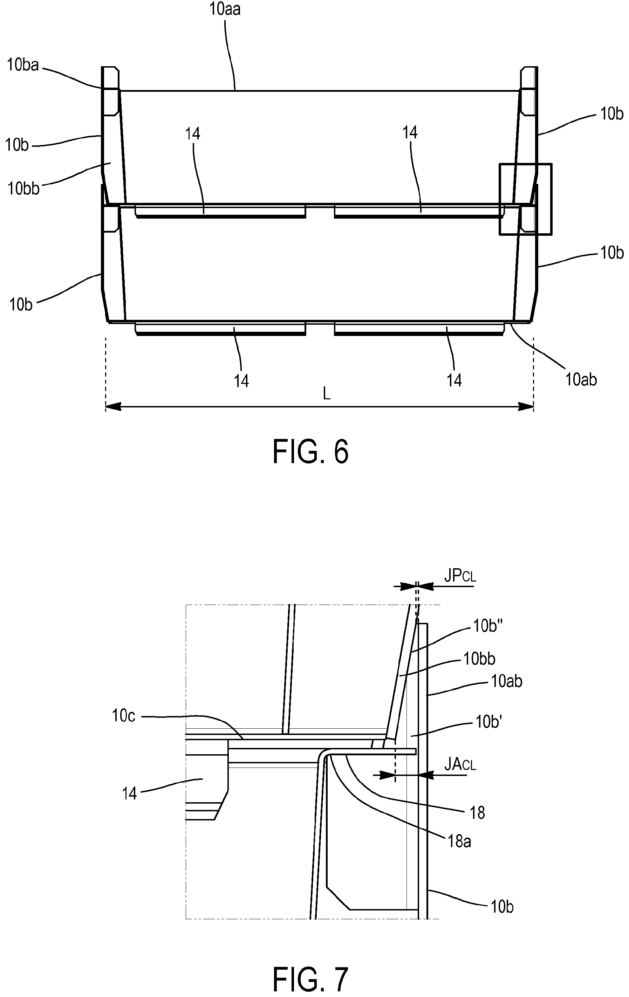

With reference to Figures 6 and 7, the ledge 18 also fits over the shoulder 16. In a longitudinal direction, an approach clearance JA_{CL} is defined between the lower edge 10bb of the short side 10b of the container on top and the interior surface 10b' of the short side 10b of the ledge 18 of the container underneath. In one embodiment, this approach clearance is approximately 10 mm. This approach clearance allows a good positioning clearance JP_{CL} defined between the exterior surface 10b" of the short side 10b of the container 10 on top and the interior surface 10b' of the short side 10b of the container underneath. In one embodiment, this positioning clearance is around 1 mm.

In each direction (transverse and longitudinal), the ledges 18 facilitate the guidance of the container while it is being stacked with other similar containers. It is for that reason that the approach clearance and the positioning clearance in the two directions are always maintained, thus ensuring that the stacked containers are aligned (for example, as shown in Figure 13).

In one embodiment of the container 10, each short side 10b also includes an optional handle 10P that extends from the upper edge 10ba and on the outside of the ledge 18. The handle 10P allows the container 10 to be handled either automatically or manually.

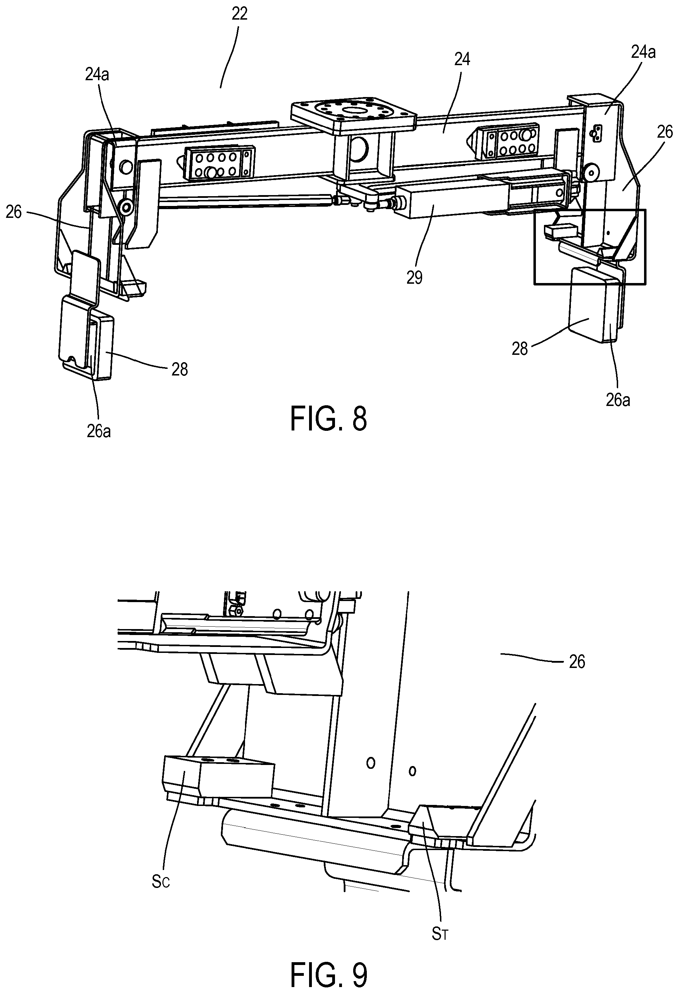

Referring once again to Figures 2 and 3 and also to Figures 8 to 12, the exterior surface 10b" of each short side 10b of the container 10 has an identification and gripping means that works in concert with an automated handling device. In this embodiment, the automated handling device is a gripper 22 that may be incorporated into a robot or some other device as known by those skilled in the art. The gripper 22 includes a longitudinal arm 24 having a predetermined length defined by two opposite ends 24a. In some embodiments, this length is adjustable. A vertical arm 26 extends from each end and includes an RFID reader 28 that is incorporated into an element 26a that extends at the bottom of the vertical arm. The element 26a extends from a free end at the bottom of the vertical arm 26 at which end there are positioned a square projection S_{C} and a triangular projection S_{T}. In some embodiments, the vertical arms 26 may be adjustable (for example using an electric actuating cylinder 29 as shown in Figure 8).

The identification and gripping means includes an RFID tag 31, positioned on the exterior surface 10b" of the short side 10b of the container 10. The RFID tag 31 allows the corresponding RFID reader 28 positioned on the gripper 22 to identify the container 10. The identification and gripping means also includes a gripping system having a system of corresponding recesses and projections so that the identification and gripping system allows the container 10 to be suitably positioned by aligning a projection in a corresponding recess. The recesses include a square recess R_{C} and a triangular recess R_{T} built into the exterior surface of each short side 10b of the container 10. The projections include the square projection S_{C} and the triangular projection S_{T} on the gripper 22 (see Figure 9). Of course, the geometry of the recesses and of the projections is not restricted to squares and triangles.

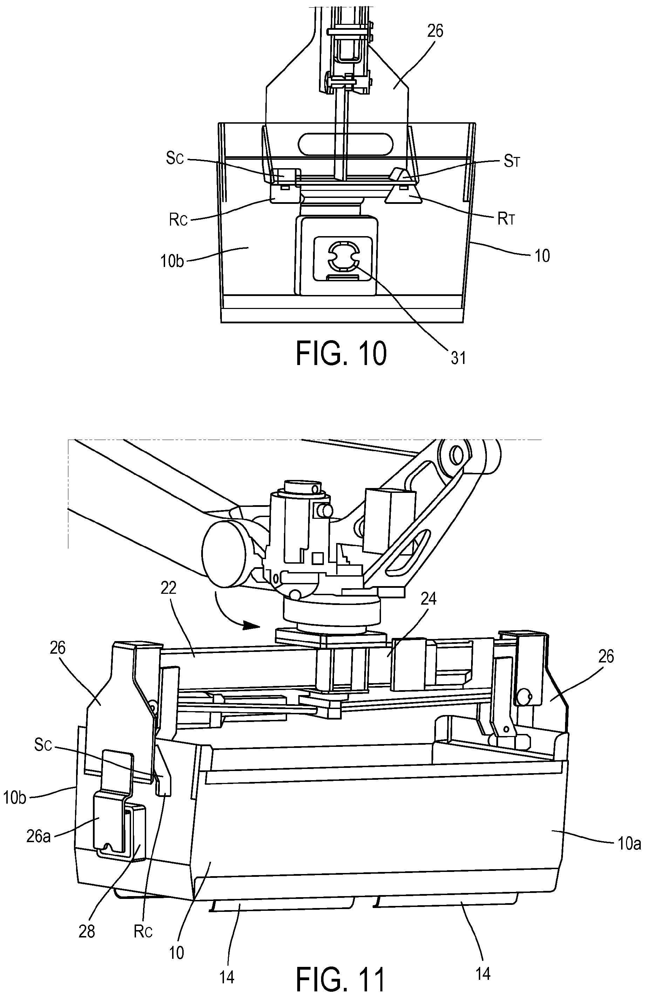

With reference to Figures 10 and 11, during a transfer sequence, each RFID reader 28 is aligned with a corresponding RFID tag 31 (see Figure 10) so that the RFID reader can recognize a container 10 that is intended for transfer (for example, by identifying a container filled with products recovered for reuse that have specific properties so that it can be transferred onto a pallet). When the RFID reader 28 of the gripper 22 detects the RFID tag 31 of the container 10, the RFID reader 28 indicates the presence of the container and also the correct position thereof in the gripper. By recognizing the container, the RFID reader 28 identifies the correct container in order to ensure that the correct products recovered for reuse are properly transferred. The transfer sequence may be carried out by a known robot 37 that may render the container mobile and rotatable (for example in the anticlockwise direction as indicated by the arrow in Figure 11).

When the RFID reader 28 is aligned with the corresponding RFID tag 31, the projections S_{C}, S_{T} of the gripper 22 are also aligned with the respective recesses R_{C}, R_{T} of the container 10. As a result, the gripper 22 can handle and transfer the container 10 (for example, during a process of transferring the container). With reference to Figure 12, this figure depicts a schematic view of the triangular projection S_{T} of the gripper 22 in the working position inside the triangular recess R_{T} of the container 10 (performed, for example, during a transfer of the container 10 by the gripper 22). If the triangular projection S_{T} is not aligned with the triangular recess R_{T}, the triangular projection is still guided towards a position of alignment with the triangular recess. As a result, whatever the status (full or empty) of the container, and even if the container is not perfectly aligned (for example, on a pallet), the system of recesses and of projections allows the container 10 to be suitably positioned by the aligning of the projection in the corresponding recess.

The configuration of the container 10 and the corresponding configuration of the gripper 22 also ensure suitable positioning of the container on a pallet. In the case of pallets completely full of (full or empty) containers (or "complete pallets"), and also in the case of pallets that are not completely full of containers (or "incomplete pallets"), it is necessary to ensure suitable positioning of each container on the relevant pallet. The legs 14 of the container 10 make the container stackable on a pallet or on itself, and the identification and gripping means of the container 10 ensures suitable positioning (for example, ensuring vertical and horizontal alignment of containers with respect to one another and of containers with respect to the pallets).

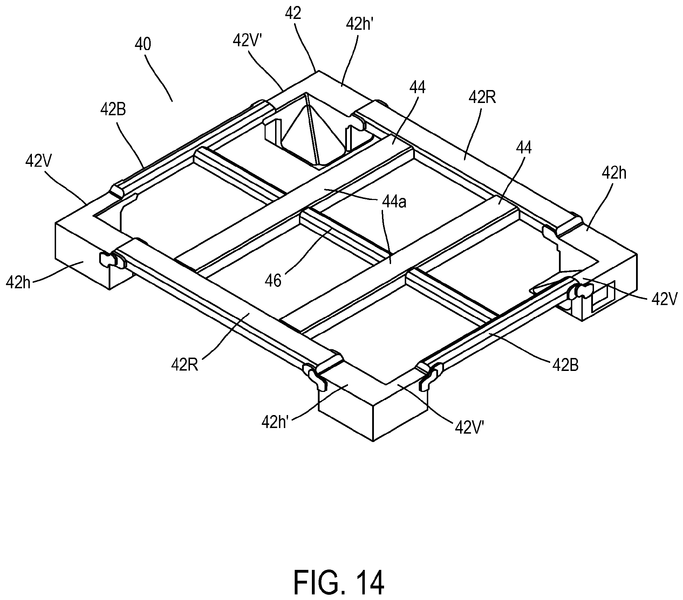

Referring also to Figure 13, it is planned for the described containers (full or empty) to be aligned and stacked on a pallet (for example, during a process of automatically making up pallets having containers filled with products recovered for reuse, identified according to a current production plan). Referring also to Figure 14, one example of a pallet 40 is given, upon which pallet the containers 10 (full or empty) are aligned and stacked. It is understood that the pallet used with the containers may be selected from any equivalent and/or known pallet embodiment.

The pallet 40 includes a frame 42 that is designed to carry containers 10. The frame 42 possesses a generally rectangular geometry. There are two opposite horizontal sides 42h separated by a predetermined distance that corresponds to the length L of at least one container 10 (see Figure 6). There are two opposite vertical sides 42V separated by a predetermined distance that corresponds to the width *l* of the container 10 (see Figure 4). The horizontal sides 42h and the vertical sides 42V are integrated so that the frame 42 is provided as one-piece. In the embodiment of Figure 14, the pallet 40 is capable of storing and transporting up to nine containers 10(full or empty)(see Figure 13).

Referring again to Figure 14, one or more crosspieces 44 are arranged between the horizontal sides 42h and are spaced apart from one another and with respect to each vertical side 42V by a predetermined distance that corresponds to the width *l* of the container 10. Each crosspiece 44 includes an upper surface 44a that allows the centring of the lower edge 10ab of the long side 10a of the container 10. To stiffen the pallet 40, an additional crosspiece 46 is provided, generally mid-way along the width of the crosspieces 44. The additional crosspiece 46 is arranged parallel to the horizontal sides 42h, and this crosspiece is arranged at right angles to the vertical sides 42V. The vertical sides 42V and the additional crosspiece 46 are arranged in the one same plane so as to allow a known device (for example a commercially available forklift) to engage on the pallet 40.

Each horizontal side 42h includes an upper surface 42h' from which a ridge 42R of predetermined height extends. Each ridge ends in a bearing surface 42R'. Each vertical side 42V also includes an upper surface 42V' from which a berm 42B (or equivalent) of predetermined height extends. Each berm ends in a bearing surface 42B'. The height of each ridge 42R is equal to the height of each berm 42B so that the bearing surfaces 42R', 42B' align the containers 10 on the pallet. The ridge 42R of each horizontal side 42h allows the engagement of the support 12 and, more particularly, of the shoulder 16 of the container 10. The berm 42B of each vertical side 42V allows the engagement of the exterior surface 10c" of the bottom 10c next to the lower edge 10bb of the short side 10b of a container 10. In this embodiment, the legs 14 of each container 10 engage along the ridges 42R and the crosspieces 44.

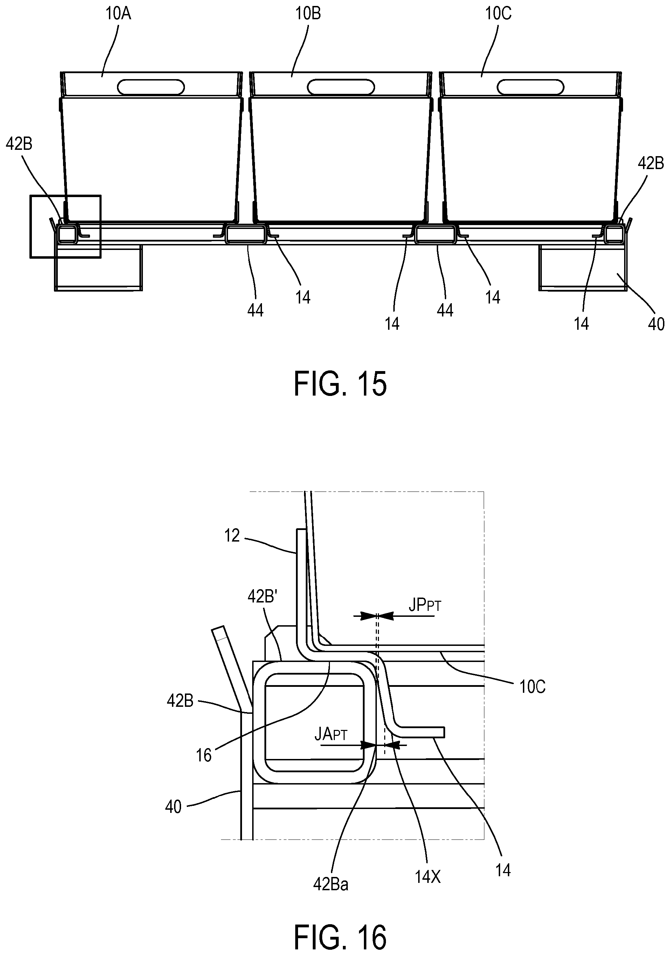

With reference to Figures 15 to 18, correct positioning between the pallet 40 and stacked containers 10A, 10B, 10C is achieved by means of male faces at different angles on the two axes. The containers are stacked in such a way that the berm 42B of each vertical side 42V, and particularly the bearing surface 42B' of each berm, engages a shoulder 16 of a container 10A, 10C. Each crosspiece 44 engages the shoulder 16 of a corresponding container 10A, 10C that has not yet been engaged by a berm. Each crosspiece 44 also engages the two shoulders 16 of the container 10B. In a transverse direction (see Figures 15 and 16), it can be seen that an approach clearance JA_{PT} is defined between one end 14x of the leg 14 and an interior edge 42Ba of the berm 42B. In one embodiment, this approach clearance is approximately 4 mm. This approach clearance allows a good positioning clearance JP_{PT} defined between the support 12 of a container 10, 10C and the pallet 40. In one embodiment, this positioning clearance is around 1 mm.

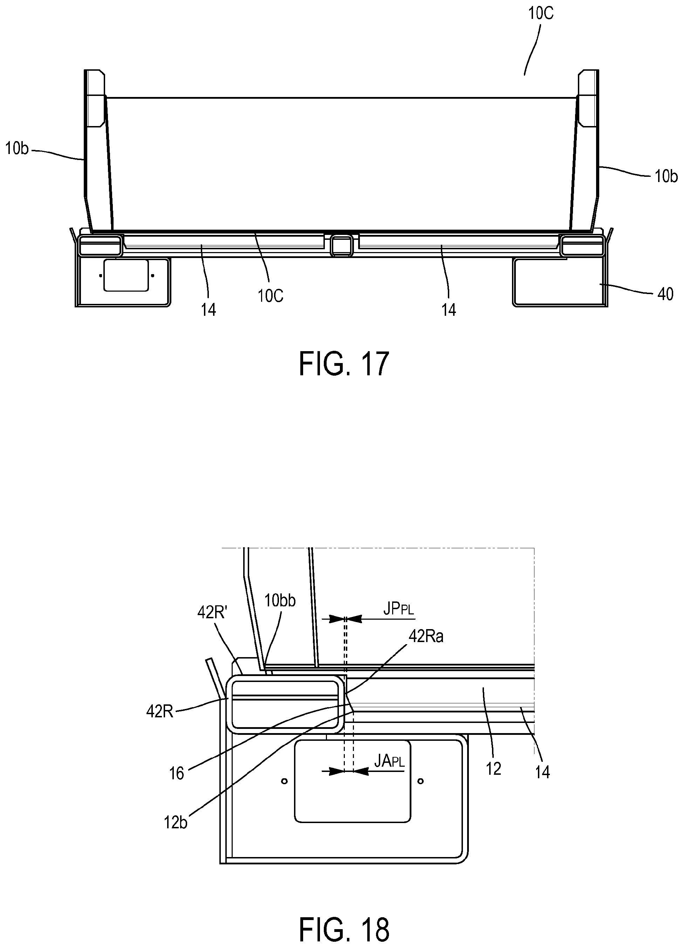

In a longitudinal direction (see Figures 17 and 18), an approach clearance JA_{PL} is defined between an interior edge 42Ra of the ridge 42R and the lower edge 10bb of the short side 10b of each container. In one embodiment, this approach clearance is approximately 8 mm. This approach clearance allows a good positioning clearance JP_{PL} defined between the interior edge 42Ra of the ridge 42R and the shoulder 16 of each container. In one embodiment, this positioning clearance is approximately 1 mm. In each direction (transverse and longitudinal), the ridges 42R and the berms 42B facilitate the guidance of the container 10 while it is being stacked with other containers. It is for that reason that the approach clearance and the positioning clearance in the two directions are always maintained, thus ensuring that the stacked containers are aligned with respect to the pallet.

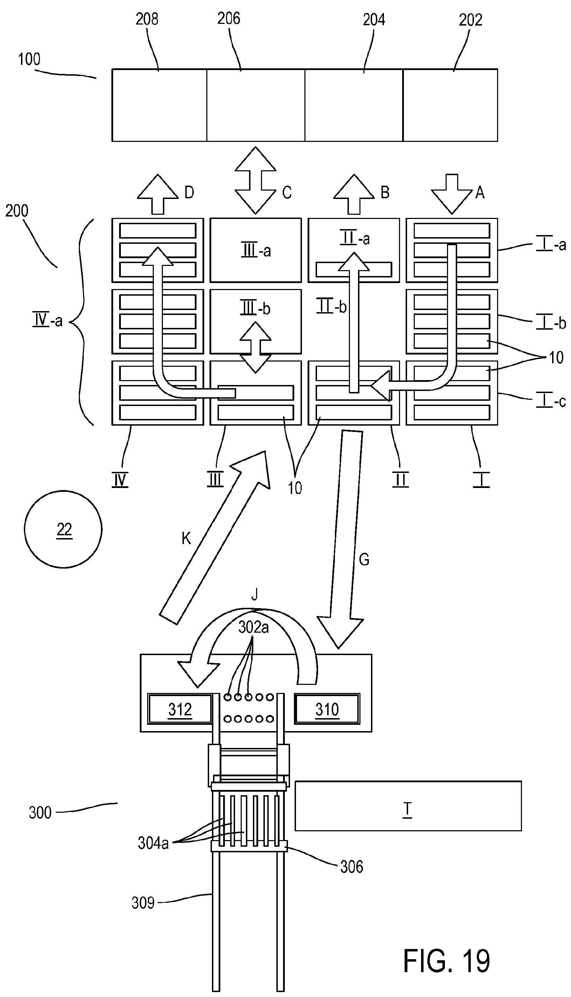

Reference is made also to Figure 19, that shows a system 100, in which the products recovered for reuse, packaged in their respective containers 10, are transferred between a management system 200 and a demoulding and extraction system 300. In some embodiments of the invention, the system 100 includes an identification means for harmonizing the identification of a pallet with the identification of the containers stored on the pallet.

The containers 10 stacked on the corresponding pallets (either the pallets as described hereinabove or the other known pallets) are managed by the management system 200. The management system 200, as disclosed in application 18/50060 filed 5 January 2018, is a system for managing pallets of containers of products recovered for reuse in which the identification of a recovered product is harmonized with the identification of the corresponding container. The management system 200 is situated downstream of a complexed-product manufacturing system (for example, at least one of an extrusion system, an assembly system, a stripping system and/or at least one equivalent system). The products recovered for reuse always arrive at the management system 200 in containers 10. The management system 200, by recognizing a particular container, therefore automatically recognizes the nature of the recovered product inside the container. The containers 10 full of products recovered for reuse are identified and stored as a function of characteristics such as their nature. The management system 200 is therefore capable of transferring and of storing each container 10 according to its identification.

The management system 200 feeds, for example, an internal mixer with products recovered for reuse. It is envisioned for the management system 200 to allow the production of rubber mixtures with diverse and varying properties as determined by the performance requirements of the resulting tyre. Thus, during a given mixing cycle, products recovered for reuse that have the properties desired during the ongoing manufacturing cycle are easily located and delivered by the management system 200. The nature of a product recovered for reuse can therefore be guaranteed according to the recipe defined by an ongoing campaign. What is meant in the invention by "campaign" is the duration of operation of an internal mixer, or of a mixing plant, using the same recipe.

With reference yet again to Figure 19, the management system 200 facilitates the execution of a method of managing the pallets of containers of recovered products, during which management method the availability of the pallets is also optimized. Identification of a pallet may be performed by known identification means, either manually (for example, using at least one visual, audio and/or tactile identifier) or automatically (for example, using numerals, codes, RFID identifications, hypertext links or equivalent means) so that the identification of the pallet can be harmonized with the identification of the containers 10 (and therefore the identification of recovered products) stored on the pallet.

In order to unload the products recovered for reuse and manage the supply fed to the internal mixer, the management system 200 includes equipment in which management zones are established. In particular, the management system 200 is made up of four belts I, II, III, IV (see Figure 19) that allow a production throughput by managing the entry, transfer, storage and exit of natures of products recovered for reuse.

Belt I is a provisioning circuit on which pallets of full containers (including pallets filled with full containers and pallets that are not completely full of full containers) enter the management system 200 via an inlet 202 (see arrow A in Figure 19). The pallets are complete or incomplete according to the ongoing campaign.

Belt II is a discharge circuit on which incomplete pallets of full containers leave the management system 200 via an outlet 204 (see arrow B in Figure 19). The discharging of incomplete pallets of full containers is performed at the end of each campaign.

Belt III is an empty-pallet provisioning and discharge circuit on which the empty pallets enter and leave the management system 200 via an access 206 (see arrow C in Figure 19). Belt III allows empty pallets to be placed on standby until such time as they are used by the management system 200.

Belt IV is a discharge circuit on which pallets of empty containers leave the management system 200 via an outlet 208 (see arrow D in Figure 19).

During a pallet management method of the invention, an automated handling device (for example, the gripper 22 that is depicted schematically in Figure 19) transfers the containers from the pallets on which the full containers are stored (belt I) towards the demoulding and extraction system 300. This same device also retrieves the empty containers and conveys them to a pallet on which empty containers are stored (belt IV). At the end of the campaign, if the pallet on belt I is still in the process of being used, this pallet will pass on to belt II, which is an intermediate storage belt, before being returned to the system for the storage of products recovered for reuse. Belt III will be used to receive and discharge empty pallets from the system for the storage of products recovered for reuse. Belt III will also be used as intermediate storage for pallets that are not completely full of empty containers.

Referring again to Figure 19, each of the four belts is divided into distinct management zones (or "stations") corresponding to different functions. For example, belt I includes a provisioning zone I-A in which the pallets of full containers enter the management system 200; a standby zone I-B in which the pallets remain on standby on the belt I during the ongoing campaign; and a standby-for-emptying zone I-C in which the pallets remain on standby awaiting emptying. Belt II includes two discharge zones II-a, II-b in which the pallets with full containers are transferred to the outlet of the management system 200 so that they can be stored in the system for the storage of products recovered for reuse; and an emptying zone II-c in which the containers of the pallet on standby are emptied. Belt III includes an empty-pallet provisioning/discharge zone III-a in which the empty pallets enter and leave the management system 200; a pallet-standby zone III-b in which pallets remain on standby awaiting empty containers; and a stacking zone III-c in which the empty containers are stored on available pallets. Belt IV includes a discharge zone IV-a in which the pallets stored with the empty containers leave the management system 200. The four belts and their zones together define the paths followed by the pallets during the various mixing campaigns. More specifically, the four belts and their zones make it possible to carry out a method in which the pallets with containers full of products recovered for reuse and the pallets with empty containers are transferred so as to achieve the conditions for the ongoing campaign. At the exit of the management system, the same pallets with the containers empty become available.

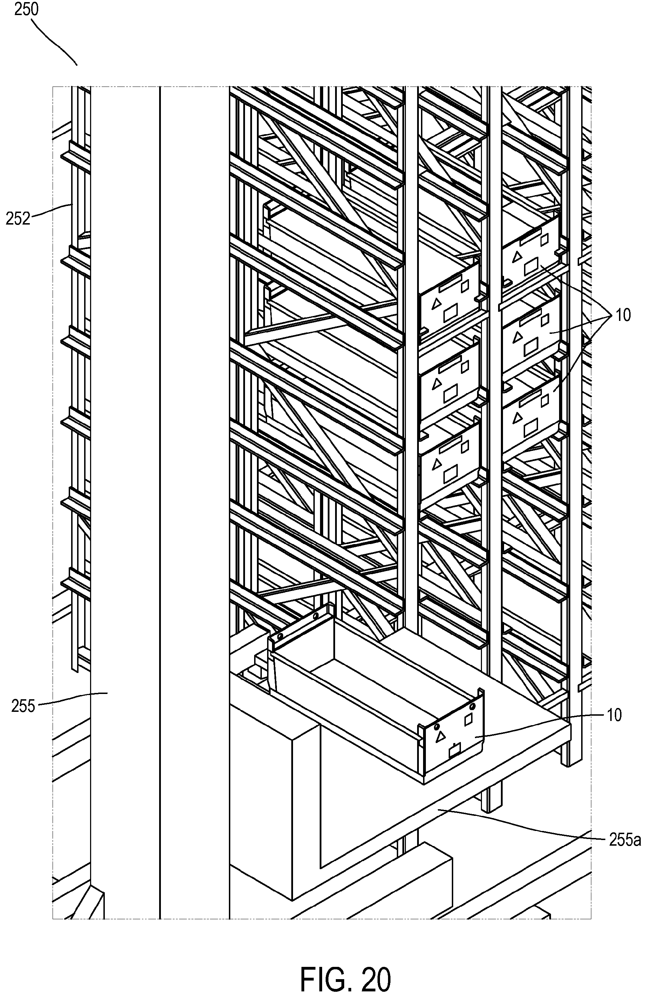

Pallets with containers full of products recovered for reuse originating from a container storage system are fed into the management system 200. Referring to Figure 20, the recovered products are stored in a container-storage system (or "container system") 250 in which the unused complexed products originating from at least one manufacturing system are stored in corresponding containers 10. These products have been deemed usable during a tyre manufacturing cycle. Each nature of complexed product has specific properties that can be controlled in order to obtain the products recovered for reuse. The products recovered for reuse arrive at the management system 200 from the system for the storage of products recovered for reuse having already been designated, according to their nature, for re-incorporation into a rubber mixture. Of course, the container system 250 may accommodate complexed products coming from one, two or several systems and/or machines from which some of what is produced cannot be exploited directly.

In one embodiment, the container system 250 may include a storage means that is chosen from automatic means (for example automatic systems and their equivalents or known manual means). As described, the invention refers to a storage means 252 that is an automated storage system (for example an "automatic storage and retrieval" system or "ASRS"). During storage in the container system 250, the complexed products are deemed usable (or "recovered for reuse") for at least one tyre manufacturing campaign. The containers 10 full of complexed products are identified and stored in the storage means 252. At the moment the complexed products arrive in the storage means, the system 100 render these recovered products available to satisfy a production plan.

The storage means 252 may include a robot (or equivalent device) capable of selectively placing and removing at least one container 10 relative to the container system 250. The selective placement and removal are performed on a prediction of products recovered for reuse that is intended for a generated production plan containing one or more given campaigns. The robot, which is selected from among the robots commercially available, is depicted as being a stacking device 255 with a shuttle 255a, that operates on rails inside the storage means 252. Of course, the stacking device 255 may be replaced with an equivalent device known to those skilled in the art. The stacking device 255 positions and retrieves the containers according to at least one production plan generated to satisfy an ongoing production plan and forthcoming production plans.

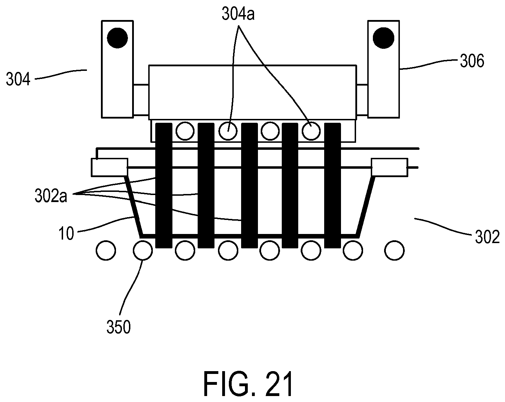

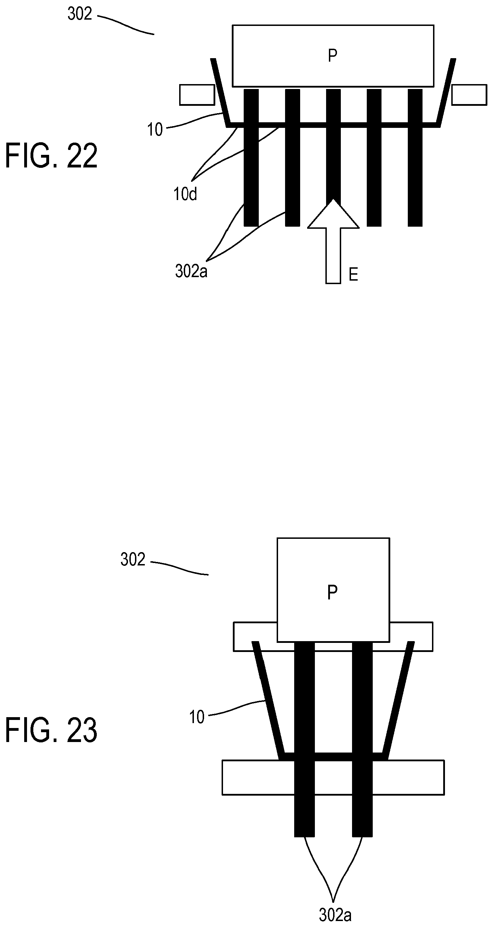

Referring once again to Figure 19 and also to Figures 21 to 23, the demoulding and extraction system 300 is positioned downstream of the management system 200. The demoulding and extraction system 300 includes a demoulding device 302 having several retractable fingers 302a (see Figures 22 and 23). The retractable fingers 302a are in register with orifices 10d that are aligned along the length of the bottom 10c of the container 10 (see Figure 2). A demoulding process includes a step of emptying the containers full of products recovered for reuse. In one embodiment, the step of emptying the containers full of products recovered for reuse includes a step of using the demoulding device 302 such that the retractable fingers 302a enter the container 10 through the orifices 10d (see Figures 21 and 22). During this step, the retractable fingers 302a raise the product recovered for reuse (see arrow E in Figure 22), so as to lift up the product recovered for reuse (which is represented as P in Figures 22 and 23) and empty the container 10.

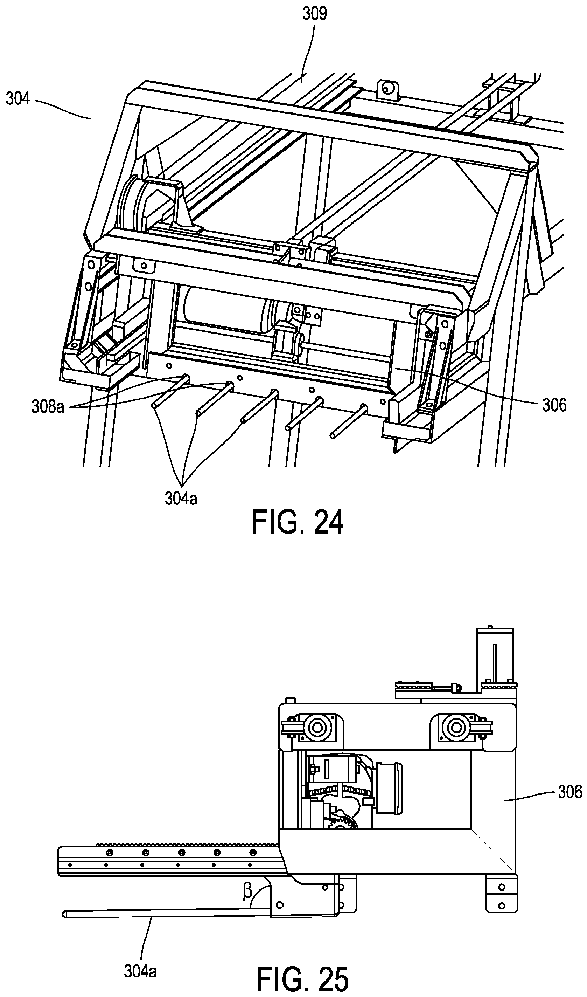

Referring once again to Figure 19 and also to Figures 20, 24 and 25, the demoulding and extraction system 300 also includes a transfer and unloading device 304 that works in concert with the demoulding device 302 to raise the recovered products and extract them from the containers 10. The transfer and unloading device 304 has several elongate fingers 304a that extend from a mobile carriage 306. More particularly, the elongate fingers 304a form a predetermined angle β with respect to a mounting support 308 of the mobile carriage 306. In one embodiment, the angle β is around 5°. This angle allows the elongate fingers to be correctly positioned underneath a recovered product that is extracted from the container.

The mobile carriage 306 moves along a horizontal path provided by a rail 309. During an extraction process, the elongate fingers 304a move at right angles to the retractable fingers 302a of the demoulding device 302 where the demoulding device lifts the recovered product from the container 10. In order to give the elongate fingers 304a clearance to move, a notched plate 308a is defined in the mounting support 308 around each elongate finger 304a. The products recovered for reuse are secured during their journey made by the mobile carriage 306 by virtue of the elongate fingers that allow for correct positioning. The elongate fingers 304a extract the products recovered for reuse from the containers, and the products recovered for reuse are placed upon a charging means that feeds a mixer or some other process (for example, a belt T in Figure 19, one or more scales or other known means).

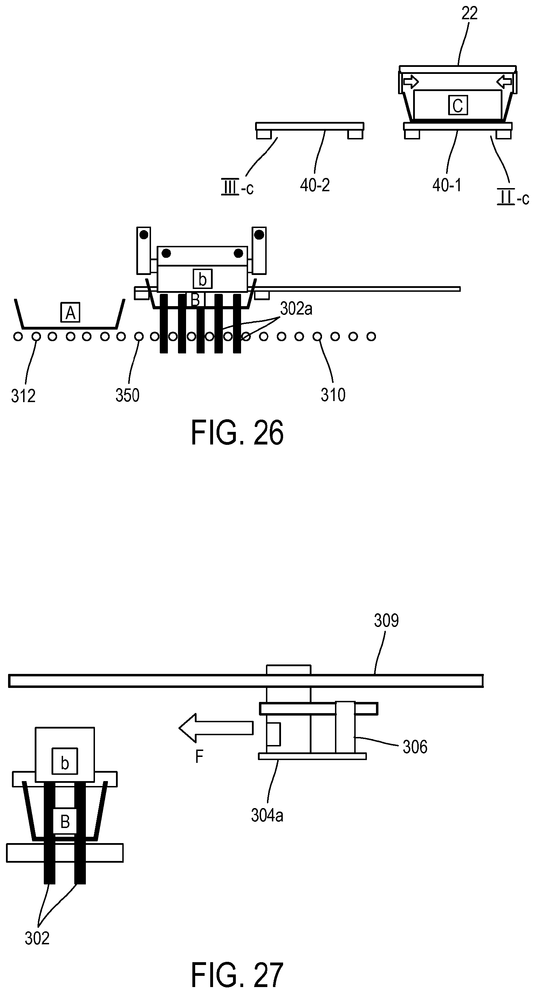

With reference again to Figure 19 and to Figures 26 to 37, the demoulding and extraction system 300 also includes a weighing station 310 upstream of the demoulding device 302. At this station, the weight of a container filled with products recovered for reuse is detected and recorded. The demoulding and extraction system 300 also includes an empty-container station 312 downstream of the demoulding device 302. At this station, an empty container remains on standby until it is transferred from the demoulding and extraction system 300 to the management system 200. The two systems 200, 300 are served by the gripper 22 that is able to move to place and collect containers 10 between the two systems. The use of a shared transfer means eliminates redundancy and also contributes to cost reduction by making efficient use of the recovered products.

A detailed description of a cycle of a demoulding and extraction method of the invention is given by way of example with reference once again to Figure 19 and also to Figures 26 to 37. All the references to a "container" or to the "containers" mean a container 10 as described here. All the references to a "pallet" or to the "pallets" mean a pallet 40 as described here. The full containers are containers full of products recovered for reuse, which are stored on corresponding pallets. According to the requirements of the ongoing campaign, the full containers are stored on pallets as a function of the nature of products recovered for reuse. It will be appreciated that the ridge that applies to the transferring of containers may be modified as needed. At the exit of the management system 200, the empty containers become available for refilling.

A demoulding and extraction method includes a step of demoulding the recovered products from the corresponding containers. The containers of products recovered for reuse, having been ordered in order to satisfy a recipe of a chosen mixture, arrive on a pallet in the emptying zone II-c of the management system 200. The gripper 22 engages each container using the identification and gripping means as described above. Identification of the correct container is therefore performed before the container is transferred to the demoulding device 302.

With reference to Figures 26 and 27, during a cycle of the demoulding and extraction method, an empty container A remains on standby at the empty-container station 312. A container B filled with products recovered for reuse is aligned with the demoulding device 302 so that the retractable fingers 302a are aligned with the orifices 10d along the length of the bottom of the container B. One or more sensors may be used to detect the presence of the container B and to begin a demoulding process as described above. The mobile carriage 306 with the elongate fingers 304a moves towards the demoulding device 302 (see arrow F in Figure 27). At the same time, a pallet 40-1 carrying a filled container C arrives at the emptying zone II-c of the management system 200. The gripper 22 engages the container C to transfer it from the management system 200 to the demoulding and extraction system 300.

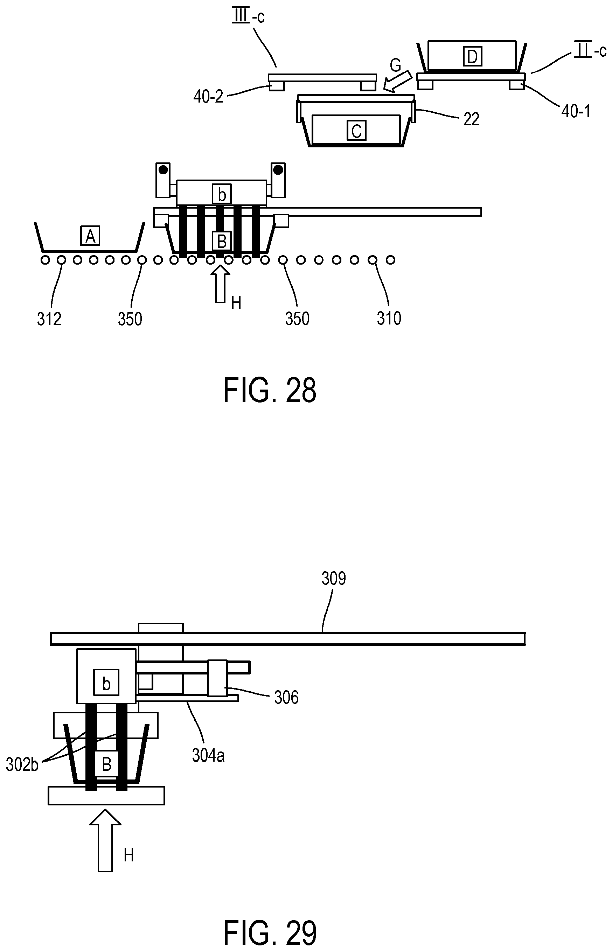

The demoulding and extraction method also includes a step of transferring a container from the management system 200 to the demoulding and extraction system 300. With reference to Figures 28 and 29, the gripper 22 transfers the container C from the emptying zone II-c of the management system 200 to convey it to the weighing station 310 (see arrow G in Figure 19 and Figure 28). During this transfer, the demoulding device 302 continues the demoulding process in which the retractable fingers 302a are introduced into the container 10 through the orifices (see Figure 28). During this step, the retractable fingers 302a raise the product b recovered for reuse in container B so as to empty container B (see arrow H in Figure 28). The mobile carriage 306 continues along its path on the rail 309 so that the elongate fingers 304a approach the recovered product b. At the management system 200, a container D, full of recovered products ordered for the current cycle, remains on standby on the pallet 40-1 that remains in the emptying zone II-c.

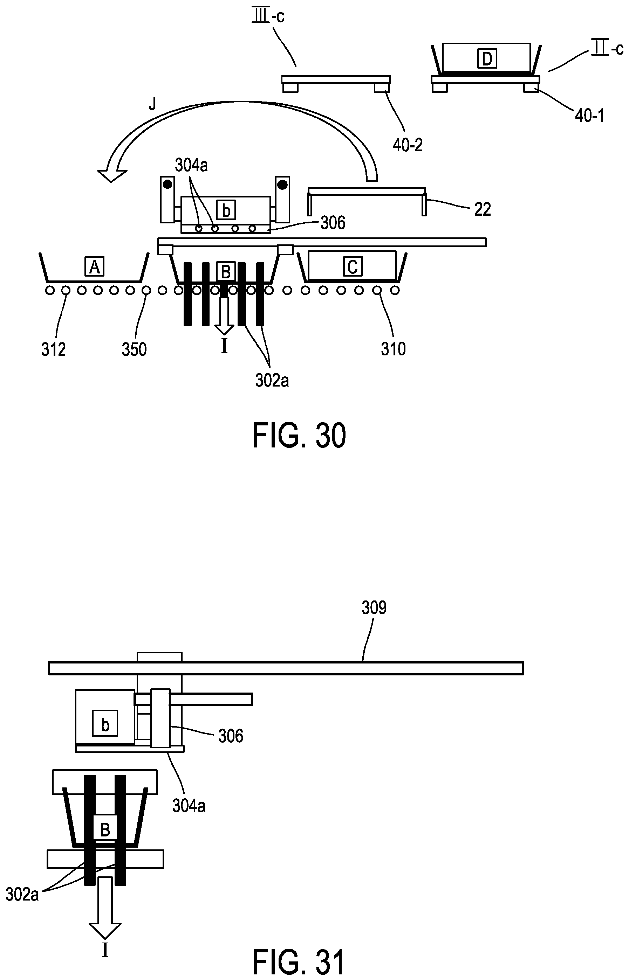

The demoulding and extraction method further includes a step of extracting a recovered product that is obtained from a demoulding process. With reference to Figures 30 and 31, the mobile carriage 306 is positioned on the rail 309 with the elongate fingers passing at right angles underneath the recovered product b, between the retractable fingers 302a of the demoulding device 302. The retractable fingers 302a have raised the recovered product b enough that the elongate fingers 304a can extract the recovered product from the demoulding device 302. The container B is now empty, and the retractable fingers 302a retract (see arrow I in Figures 30 and 31). The gripper 22, having set down the container C at the weighing station 310, moves towards the empty-container station 312 in order to prepare to transfer the container A to the management system 200 (see arrow J in Figure 19 and Figure 30). The container D remains on standby on the pallet 40-1 in the emptying zone II-c of the management system 200.

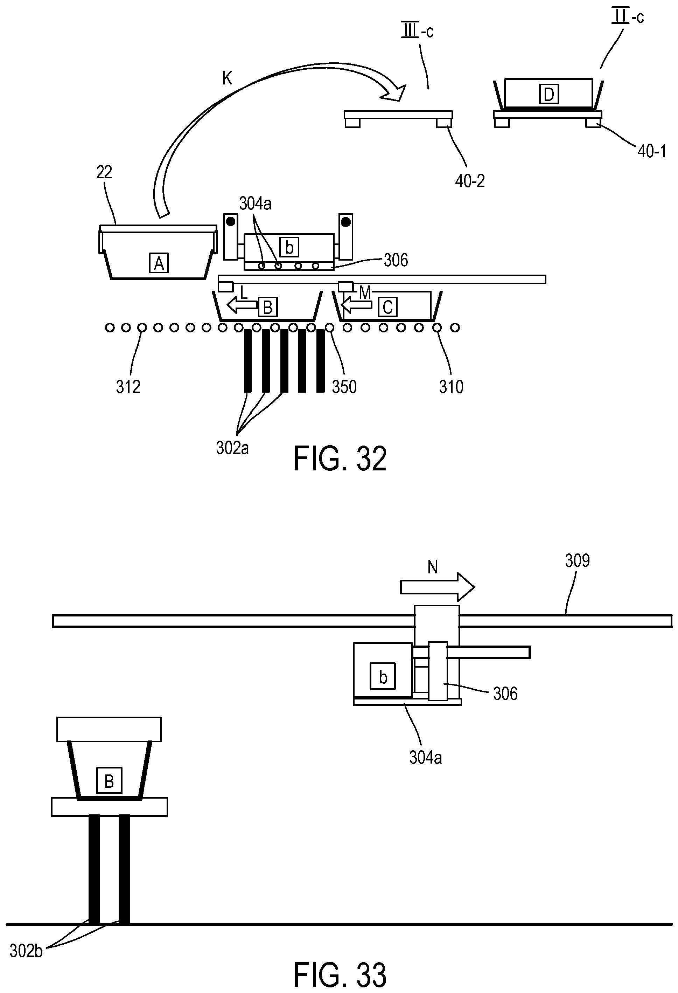

The demoulding and extraction method of the invention further includes a step of transferring empty containers from the demoulding and extraction system 300 to the management system 200. With reference to Figures 32 and 33, the gripper 22 engages container A using the identification and gripping means as described. The gripper 22 transfers container A onto a pallet 40-2 on standby in the stacking zone III-c of the management system 200 (see arrow K in Figure 19 and Figure 32). The pallet 40-2 may remain on standby until there are enough empty containers stacked up to make this pallet leave the management system 200 (for example, according to at least one production plan generated to satisfy an ongoing production plan and forthcoming production plans). A conveyor 350 is in the process of carrying container B, now empty, from the demoulding device 302 to the empty-container station 312 (see arrow L in Figure 32). The conveyor 350 is also in the process of carrying container C, still full of a product recovered for reuse, c, from the weighing station 310 to the demoulding device 302 in order to carry out the demoulding process as described (see arrow M in Figure 32). The mobile carriage 306, passing along the rail 309 (see arrow N in Figure 33), conveys the product recovered for reuse, b, to a next process.

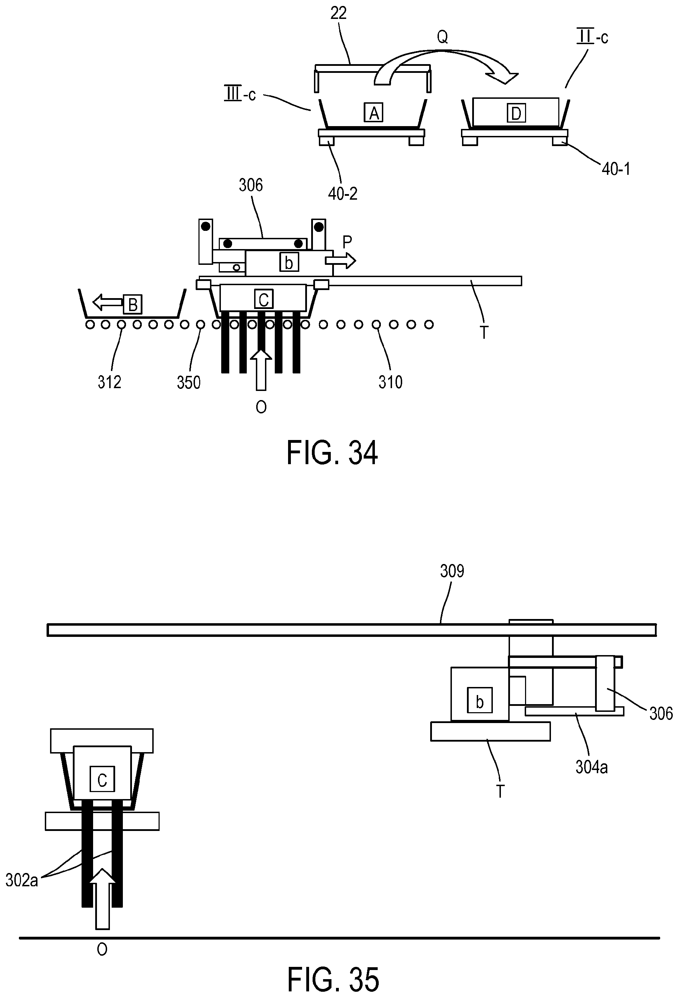

The demoulding and extraction method further includes a step of providing an extracted product recovered for reuse to a next process. With reference to Figures 34 and 35, the empty container B arrives at the empty-container station 312, and the weighing station 310 is free. The retractable fingers 302a are raised in order to already begin the demoulding process (as described) in relation to the recovered product c (see arrow O in Figures 34 and 35). The mobile carriage 306 that has moved arrives at a belt T (see also Figure 19) that carries recovered products to a next process (for example, to a mixer). The elongate fingers 304a release the recovered product b onto the belt T so that it can be delivered in the order intended by the current campaign (see arrow P in Figure 34). At the same time, the gripper 22 has placed container A onto the pallet 40-2 and is in the process of engaging on container D on standby in the emptying zone II-c of the management system 200 (see arrow Q in Figure 34).

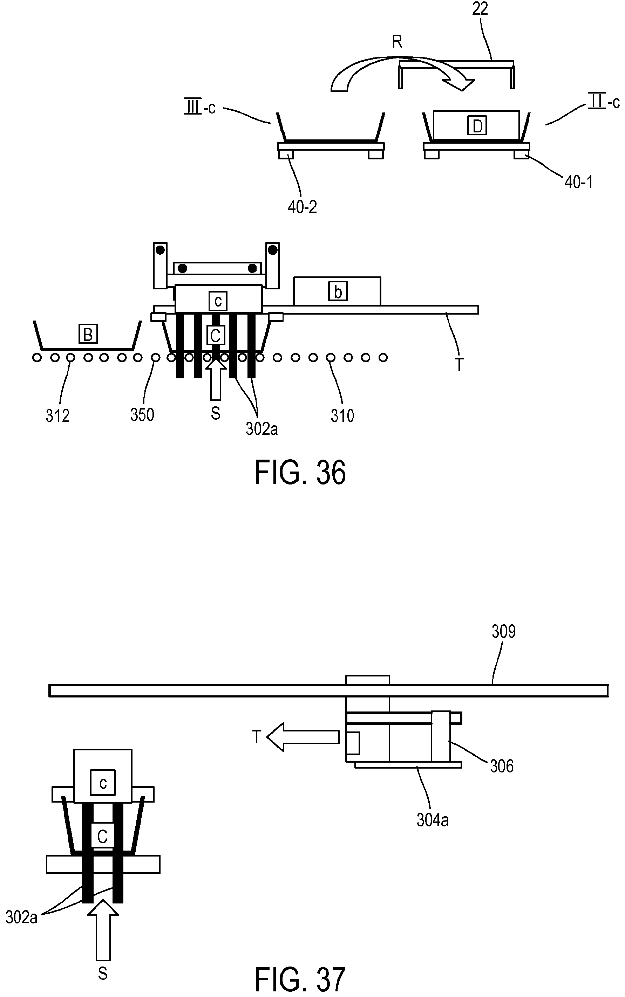

Referring to Figures 36 and 37, the gripper 22 is in the process of transferring the filled container D from the emptying zone II-c of the management system 200 to the weighing station 310 of the demoulding and extraction system 300 (see arrow R in Figure 36). The demoulding device 302 empties the container C (see arrow S in Figures 36 and 37), and the mobile carriage 306 returns to retrieve the extracted product recovered for reuse (see arrow T in Figure 37). A cycle of the demoulding and extraction method of the invention, therefore, is repeated throughout the duration of a campaign or until such time as a planned cycle ends.

Any cycle of the method may be performed by PLC control and may include pre-programming of management data (for example, a total number of containers required when these are offered with a certain number of natures, a total number of containers intended to be transferred from the management system 200 to the demoulding and extraction system 300, an identification of a container on standby, a residence time that a filled container spends on standby in the management system 200, etc.).

For all embodiments, a system can be put in place to ensure the repeatability of the filling and refilling of each container and the correct stacking of each pallet. Verification can be carried out by a known means, including a viewing system that may be manual or automated (for example, with one or more cameras in communication with the PLC). The PLC is configured to verify the natures of the stored recovered products against the chosen rubber mixture recipe, in terms of weight required and in the prescribed tolerance. The conformity of the properties of the mixture during the course of each campaign is thus respected.

The terms "at least one" and "one or more" are used interchangeably. The ranges given as lying "between a and b" encompass the values of "a" and "b".

Although particular embodiments of the invention have been illustrated and described, it will be appreciated that various changes, additions and modifications can be made without departing from the scope of the present description. Therefore, no limitation should be imposed on the scope of the invention described, apart from those set out in the appended claims.

## Claims

1. A process of processing and extracting products recovered for reuse originating from at least one complexed-product manufacturing system in a tire production installation, the process comprising the following steps:
identifying the complexed products that are recovered for reuse according to a planned rubber mixing cycle, in using the identified recovered products as feedstock products in the rubber mixing cycle;
filling corresponding containers (10) with the identified recovered products, each container containing only one recovered product type at any one time so as to obtain containers filled with complexed products at a predictable volume and weight;
identifying containers filled with the identified recovered products according to the rubber mixing cycle;
transferring the filled containers (10) from a management system (200) downstream of the complexed-product manufacturing system toward a demoulding and extraction system (300) downstream of the management system (200);
demoulding the products recovered for reuse from the containers (10) at the demoulding and extraction system (300) in order to empty the containers; and
extracting the products recovered for reuse from the containers at the demoulding and extraction system (300);
wherein the complexed products comprise semi-finished products made up of at least two rubber mixtures having different properties.

2. The process of claim 1, further comprising the following steps:
stacking the containers filled with the identified recovered products upon one or more pallets (40), each pallet having a generally rectangular geometry;
weighing each container filled with the identified recovered products at a weighing station (310) before the step of demoulding the recovered products; and
recovering automatically all empty containers after the step of demoulding the recovered products in order to transfer the empty containers from the demoulding and extraction system (300) to the management system (200).

3. The process of claim 2, wherein:
the step of transferring the containers includes the step of transferring the containers from an emptying zone (II-c) of the management system (200) toward the weighing station (310) of the demoulding and extraction system (300); and
the step of recovering automatically the empty containers includes the step of transferring the empty containers from an empty-container station (312) toward a stacking zone (III-c) of the management system (200).

4. The process of claim 2 or claim 3, further comprising the step of providing an identification and gripping system with an automated handling device that works with an identification and gripping means comprising a tag integrated in the container (10) that allows the identification of the container by a reader of the automated handling device, and a system of recesses (R_{C}, R_{T}) and corresponding projections (S_{C}, S_{T}) ;
such that the gripping system effects proper positioning of the container (10) by aligning a projection in a corresponding reinforcement.

5. The process of claim 4, further comprising the step of aligning the reader with the tag so that the reader can recognize the associated container (10).

6. The process of claim 4 or claim 5, wherein the reader comprises an RFID reader (28) and the tag comprises an RFID tag (31).

7. The process of any preceding claim, further comprising the step of storing the containers (10) full of products recovered for reuse in a container storage system (250) having a storage means (252) at which the containers full of products recovered for reuse are identified and stored according to the natures of the products, the properties of which are known.

8. The process of claim 7, wherein the storage means (252) comprises an automated storage system.

9. The process of any preceding claim, further comprising the step of transferring the products recovered for reuse toward a system downstream of the demoulding and extraction system (300).

10. The process of claim 9, wherein the system downstream of the demoulding and extraction system (300) comprises at least one mixer.

11. The process of claim 10, further comprising the step of harmonizing the identification of a pallet with the identification of the containers (10) stored on the pallet.

## Patentansprüche

1. Verfahren zum Verarbeiten und Extrahieren von zur Wiederverwendung rückgewonnenen Produkten, die aus mindestens einem Herstellungssystem für komplexierte Produkte in einer Reifenproduktionsanlage stammen, wobei das Verfahren die folgenden Schritte umfasst:
Identifizieren der komplexierten Produkte, die zur Wiederverwendung gemäß einem geplanten Kautschukmischzyklus rückgewonnen werden, bei Verwenden der identifizierten rückgewonnenen Produkte als Rohmaterialprodukte in dem Kautschukmischzyklus;
Füllen entsprechender Behälter (10) mit den identifizierten rückgewonnenen Produkten, wobei jeder Behälter zu jedem Zeitpunkt nur eine Art von rückgewonnenem Produkt enthält, um mit komplexierten Produkten mit einem vorhersagbaren Volumen und Gewicht gefüllte Behälter zu erhalten;
Identifizieren von Behältern, die mit den identifizierten rückgewonnenen Produkten gemäß dem Kautschukmischzyklus gefüllt sind;
Transferieren der gefüllten Behälter (10) von einem Verwaltungssystem (200) stromabwärts des Herstellungssystems für komplexierte Produkte zu einem Entformungs- und Extraktionssystem (300) stromabwärts des Verwaltungssystems (200);
Entformen der zur Wiederverwendung rückgewonnenen Produkte aus den Behältern (10) an dem Entformungs- und Extraktionssystem (300), um die Behälter zu leeren; und
Extrahieren der zur Wiederverwendung rückgewonnenen Produkte aus den Behältern an dem Entformungs- und Extraktionssystem (300);
wobei die komplexierten Produkte halbfertige Produkte umfassen, die aus mindestens zwei Kautschukmischungen mit unterschiedlichen Eigenschaften bestehen.

2. Verfahren nach Anspruch 1, das ferner die folgenden Schritte umfasst:
Stapeln der mit den identifizierten rückgewonnenen Produkten gefüllten Behälter auf einer oder mehreren Paletten (40), wobei jede Palette eine im Allgemeinen rechteckige Geometrie aufweist;
Wiegen jedes mit den identifizierten rückgewonnenen Produkten gefüllten Behälters an einer Wiegestation (310) vor dem Schritt des Entformens der rückgewonnenen Produkte; und
automatisches Rückgewinnen aller leeren Behälter nach dem Schritt des Entformens der rückgewonnenen Produkte, um die leeren Behälter von dem Entformungs- und Extraktionssystem (300) zu dem Verwaltungssystem (200) zu transferieren.

3. Verfahren nach Anspruch 2, wobei:
der Schritt des Transferierens der Behälter den Schritt Transferieren der Behälter von einer Entleerungszone (IIc) des Verwaltungssystems (200) zu der Wiegestation (310) des Entformungs- und Extraktionssystems (300) umfasst; und
der Schritt des automatischen Rückgewinnens der leeren Behälter den Schritt Transferieren der leeren Behälter von einer Leerbehälterstation (312) zu einer Stapelzone (III-c) des Verwaltungssystems (200) umfasst.

4. Verfahren nach Anspruch 2 oder Anspruch 3, ferner umfassend den Schritt Bereitstellen eines Identifikations- und Greifsystems mit einer automatisierten Handhabungsvorrichtung, die mit einem Identifikations- und Greifmittel arbeitet, umfassend eine in den Behälter (10) integrierte Kennzeichnung, die die Identifikation des Behälters durch ein Lesegerät der automatisierten Handhabungsvorrichtung ermöglicht, und ein System aus Aussparungen (R_{C}, R_{T}) und entsprechenden Vorsprüngen (S_{C}, S_{T});
so dass das Greifsystem eine korrekte Positionierung des Behälters (10) durch Ausrichten eines Vorsprungs in einer entsprechenden Verstärkung bewirkt.

5. Verfahren nach Anspruch 4, ferner umfassend den Schritt Ausrichten des Lesegeräts mit der Kennzeichnung, so dass das Lesegerät den zugehörigen Behälter (10) erkennen kann.

6. Verfahren nach Anspruch 4 oder Anspruch 5, wobei das Lesegerät ein RFID-Lesegerät (28) umfasst und die Kennzeichnung eine RFID-Kennzeichnung (31) umfasst.

7. Verfahren nach einem der vorhergehenden Ansprüche, ferner umfassend den Schritt Lagern der mit zur Wiederverwendung rückgewonnenen Produkten gefüllten Behälter (10) in einem Behälterlagersystem (250) mit einem Lagermittel (252), an dem die mit zur Wiederverwendung rückgewonnenen Produkten gefüllten Behälter identifiziert und gemäß der Beschaffenheit der Produkte, deren Eigenschaften bekannt sind, gelagert werden.

8. Verfahren nach Anspruch 7, wobei das Lagermittel (252) ein automatisiertes Lagersystem umfasst.

9. Verfahren nach einem der vorhergehenden Ansprüche, ferner umfassend den Schritt Transferieren der zur Wiederverwendung rückgewonnenen Produkte zu einem System stromabwärts des Entformungs- und Extraktionssystems (300).

10. Verfahren nach Anspruch 9, wobei das System stromabwärts des Entformungs- und Extraktionssystems (300) mindestens einen Mischer umfasst.

11. Verfahren nach Anspruch 10, ferner umfassend den Schritt Abstimmen der Identifikation einer Palette mit der Identifikation der auf der Palette gelagerten Behälter (10).

## Revendications

1. Procédé de conditionnement et d'extraction de produits valorisés obtenus en provenance d'au moins un système de fabrication de produits complexés d'une installation de fabrication des pneumatiques, dans lequel le procédé comprend les étapes suivantes :
d'identification des produits complexés valorisés pour réutilisation selon un cycle de mélangeage de caoutchouc prévu, en utilisant les produits valorisés identifiés comme produits entrants dans le cycle de mélangeage de caoutchouc;
de remplissage des contenants (10) correspondants de produits valorisés identifiés, chaque contenant ne contenant qu'un seul produit valorisé à la fois de manière à obtenir des contenants remplis avec des produits complexés avec un volume et un poids prévisibles ;
d'identification des contenants remplis des produits valorisés identifiés selon le cycle de mélangeage de caoutchouc ;
de transfert des contenants (10) depuis un système de gestion (200) en aval du système de fabrication de produits complexés vers un système de démoulage et d'extraction (300) en aval du système de gestion (200) ;
de démoulage des produits valorisés des contenants (10) au système de démoulage et d'extraction (300) pour vider les contenants ; et
d'extraction des produits valorisés obtenus des contenants au système de démoulage et d'extraction (300) ;
dans lequel les produits complexés comprennent des produits semi-finis réalisés avec au moins deux mélanges de caoutchouc ayant des propriétés différentes.

2. Procédé selon la revendication 1, comprenant en outre les étapes suivantes :
d'empilage des contenants remplis sur une ou plusieurs palettes (40), chaque palette étant constituée d'une géométrie généralement rectangulaire ;
de pesage du poids d'un contenant rempli de produits valorisés à un poste de pesée (310) avant l'étape de démoulage des produits valorisés ; et
de récupération automatique des contenants vides après l'étape de démoulage des produits valorisés pour transférer les contenants vides depuis le système de démoulage et d'extraction (300) vers le système de gestion (200).

3. Procédé selon la revendication 2, dans lequel :
l'étape de transfert des contenants (10) comprend l'étape de transfert des contenants depuis une zone de vidage (II-c) du système de gestion (200) vers le poste de pesée (310) du système de démoulage et d'extraction (300) ; et
l'étape de récupération automatique des contenants vides comprend l'étape de transfert des contenants vides depuis un poste contenant vide (312) du système de démoulage et d'extraction (300) vers une zone d'empilage (III-c) du système de gestion (200).

4. Procédé selon l'une quelconque des revendications 2 ou 3, comprenant en outre l'étape de fournir un système d'identification et de préhension avec un dispositif de manutention automatisé qui marche avec un moyen d'identification et de préhension comprenant un tag intégré au contenant (10) qui permet l'identification du contenant par un lecteur du dispositif de manutention automatisé, et un système de renfoncements (R_{C}, R_{T}) et de saillies (S_{C}, S_{T}) correspondants ;
de sorte que le système de préhension permet un bon positionnement du contenant (10) grâce au recentrage d'une saillie dans un renforcement correspondant.

5. Procédé selon la revendication 4, comprenant en outre l'étape d'alignement du lecteur avec le tag pour que le lecteur puisse reconnaitre le contenant (10) associé.

6. Procédé selon la revendication 4 ou 5, dans lequel le lecteur comprend un lecteur RFID (28) et le tag comprend un tag RFID (31).

7. Procédé de l'une quelconque des revendications précédentes, comprenant en outre l'étape de stockage des contenants remplis de produits valorisés a un système contenant (250) avec un moyen de stockage (252) auquel des contenants remplis de produits valorisés sont identifiés et stockés en fonction de différentes natures dont les propriétés sont connues.

8. Procédé selon la revendication 7, dans lequel le moyen de stockage de produits valorisés (250) comprend un système de stockage automatisé.

9. Procédé selon l'une quelconque des revendications précédentes, comprenant en outre l'étape de transférer les produits valorisés obtenus vers un système en aval du système de démoulage et d'extraction (300).

10. Procédé selon la revendication 9, dans lequel le système en aval du système de démoulage et d'extraction (300) comprend au moins un mélangeur.

11. Procédé selon la revendication 10, comprenant en outre l'étape d'harmonisation de l'identification d'une palette avec l'identification des contenants (10) stockés sur la palette.
